# EUROPÄISCHE PATENTSCHRIFT

(11) **EP 3 697 594 B1**
(45) Veröffentlichungstag und Bekanntmachung des Hinweises auf die Patenterteilung: **08.12.2021**
(21) Anmeldenummer: 18789387.0
(22) Anmeldetag: 17.10.2018
(51) Int. Cl.: B29C 64/106, B29C 64/209, B33Y 30/00, B29C 48/02, B29C 48/25, B29C 48/92, B29C 48/05

(54) **DRUCKKOPF FÜR EINEN 3D-DRUCKER**
PRINT HEAD FOR A 3D PRINTER
TÊTE D'IMPRESSION POUR IMPRIMANTE 3D

(30) Priorität: 19.10.2017 DE 102017218707
(43) Veröffentlichungstag der Anmeldung: 26.08.2020
(73) Patentinhaber: Robert Bosch GmbH, 70442 Stuttgart (DE)
(72) Erfinder: JAHNLE, Hendrik, 71397 Leutenbach (DE); LUNG, Norman, 71384 Weinstadt (DE)
(86) Internationale Anmeldenummer: PCT/EP2018/078403
(87) Internationale Veröffentlichungsnummer: WO 2019/076982

(56) Entgegenhaltungen:
- WO-A1-90/02034
- WO-A1-2018/086792
- DE-A1-102016 222 315
- US-A- 5 649 277
- US-A- 6 067 480

## Beschreibung

Die vorliegende Erfindung betrifft einen Druckkopf für einen 3D-Drucker.

### Stand der Technik

Ein 3D-Drucker für ein in seiner Viskosität veränderliches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in dem das Ausgangsmaterial druckfertig aufbereitet wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material deponiert werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Am verbreitetsten ist das "fused deposition modeling" (FDM), bei dem ein Filament aus dem Ausgangsmaterial in einer elektrisch beheizten Extruderdüse aufgeschmolzen und schichtweise auf eine Plattform aufgebracht wird. In Form eines derartigen Filaments ist das Ausgangsmaterial sehr teuer. In der US 2016/082 627 A1 wird vorgeschlagen, das Ausgangsmaterial in Granulatform zuzuführen und mit einer Förderschnecke zu einer beheizten Zone zu fördern, aus der es in plastifizierter Form austritt. Zum einen ist Granulat deutlich günstiger, und zum anderen können Mischungen aus verschiedenen thermoplastischen Materialien auf diese Weise einfach hergestellt werden.

Ferner ist aus der zum Zeitpunkt dieser Anmeldung noch nicht veröffentlichten Anmeldung DE102016222306 bekannt, ein Granulat über einen Kolben und eine beheizte Strecke zu plastifizieren. Wenn der Kolben auf das Granulat drückt, wird dieses verdichtet und zu einer Plastifizierungszone gefördert. Dabei treten Kräfte auf, die den Kolben und eine Zylinderwandung des Druckkopfes stark beanspruchen.

Die Schrift WO 90/02034 A1 offenbart eine Vorrichtung zur Formgebung von Halbzeug aus hochmolekularen Kunststoffen, enthaltend eine Druckkammer mit einem in der Druckkammer oszillierenden Kolben.

In der US 5 649 277 A ist eine Vorrichtung zur Erzeugung dreidimensionaler Objekte gezeigt, wobei erhitztes Material über eine Düse schichtweise aufgetragen wird.

Der Erfindung liegt die Aufgabe zugrunde, einen Druckkopf bereitzustellen, der den auftretenden Kräften Stand hält und einen stabilen Druckprozess ermöglicht.

### Offenbarung der Erfindung

Im Rahmen der Erfindung wurde ein Druckkopf für einen 3D-Drucker entwickelt. Dieser Druckkopf umfasst eine Einzugszone mit einer Zuführung für ein in seiner Viskosität veränderliches Ausgangsmaterial, eine Plastifizierungszone mit einer Heizung und einer Austrittsöffnung für die flüssige Phase des Ausgangsmaterials sowie eine Fördervorrichtung zur Förderung des Granulats von der Einzugszone in die Plastifizierungszone, wobei die Fördervorrichtung einen in die Einzugszone einführbaren Kolben umfasst.

Dabei kann insbesondere eine Zuführung für ein als Granulat vorliegendes Ausgangsmaterial vorgesehen sein. Das Ausgangsmaterial kann insbesondere ein thermoplastisches Material sein.

Im Vergleich zu einem Druckkopf, der Granulat mit einer Förderschnecke transportiert, lässt sich der Druckkopf gemäß der Erfindung kompakter bauen. Dies wiederum hat zur Folge, dass der Druckkopf leichter und einfacher bewegbar ist. Dies ist insbesondere dann von Vorteil, wenn der Druckkopf sehr schnell, insbesondere mit Geschwindigkeiten von 100 mm/s oder mehr, bewegt werden soll.

Weiterhin wurde überraschenderweise erkannt, dass die Förderung des Ausgangsmaterials mit dem Kolben die Qualität des Materials besser erhält als die Förderung mit einer Förderschnecke.

Zum einen kann die Zeitdauer, für die das Material oberhalb seiner Schmelztemperatur verweilt, deutlich reduziert werden, so dass es in geringerem Maße thermisch degeneriert. Durch eine zu hohe thermische Belastung entstehen Spaltprodukte, in erster Linie Gase, welche durch die im System vorherrschenden Drücke eine weitere Zersetzung des Materials beschleunigen und auch direkt dessen Qualität beeinflussen. Dies äußert sich beispielsweise in Schwankungen des extrudierten Volumens oder auch durch eine Verfärbung, oberflächliche Verbrennung oder ein Schäumen des extrudierten Materials. Des Weiteren bilden sich Beläge im System, welche sich lösen und das System verstopfen oder als lose Partikel in das herzustellende Objekt gelangen. Durch den Druck gasförmiger Spaltprodukte kann weiterhin auch ungewollt Material extrudiert werden. Ist die Austrittsöffnung durch ein Ventil verschlossen, kann sich hier sogar ein Überdruck aufbauen und der Druckkopf explodieren. Ist die Austrittsöffnung durch feste Spaltprodukte verschlossen, kann sich ebenfalls ein Druck im Druckkopf aufbauen, der sich in einer explosionsartigen Extrusion heißen Materials entladen kann. Auf Grund der Nachwärme kann dies auch dann noch passieren, wenn durch ein Sicherheitssystem die Energiezufuhr zur Heizung des Druckkopfes bereits abgeschaltet wurde.

Zum anderen werden auch keine Scherkräfte auf das Material ausgeübt, die Polymerketten des Materials zerteilen. Je länger diese Polymerketten sind, desto größer ist die mechanische Festigkeit des letztendlich erhaltenen Objekts gegenüber beispielsweise Zug- Druck- und Biegebeanspruchungen. Auch die Beständigkeit des Objekts gegen chemische Medien ist umso besser, je länger die Polymerketten sind.

Weiterhin können beliebig kleine Volumina plastifiziert werden, wohingegen bei der Förderung mit einer Förderschnecke immer eine gewisse Mindestmenge an Material plastifiziert werden muss. Eine Förderschnecke benötigt eine derartige Mindestmenge, um die Schubkräfte aufzubauen, die für die Funktion der Förderschnecke zwingend erforderlich sind.

Der Kolben weist einen der Plastifizierungszone zugewandten ersten Kolbenabschnitt mit einer Führungsfläche auf, durch die der Kolben in einer Bohrung des Druckkopfs geführt ist.

Eine derartige Anordnung der Führungsfläche des Kolbens verhindert in vorteilhafter Weise ein Verklemmen und Verkanten des Kolbens in der Bohrung des Druckkopfs, wodurch ein quasi verschleißfreier Betrieb des Druckkopfes ermöglicht wird. Die Erfindung stellt sicher, dass der Kolben immer optimal in der Bohrung des Druckkopfs geführt wird und dieser beim Auftreffen auf das Granulat nicht ausweicht. Dadurch wird ein kontinuierlicher und dauerhafter Betrieb des Druckkopfs ermöglicht.

Ferner ist die Führungsfläche in ihrer axialen Ausdehnung länger als eine maximale axiale Ausdehnung einer Öffnungsfläche der Zuführung zur Bohrung.

Die Größe der Öffnungsfläche der Zuführung zur Bohrung ist relevant für die Menge des zugeführten Granulats aus der Zuführung in die Bohrung des Druckkopfs, bzw. in die Einzugszone des Druckkopfs.

Der durch die Erfindung ermöglichte Überstand der Führungsfläche des Kolbens zur Öffnungsfläche der Zuführung sorgt in vorteilhafter Weise für eine stabile Führung des Kolbens in der Bohrung.

Besonders vorteilhafte Weiterbildungen der Erfindung ergeben sich bei einer axialen Ausdehnung der Führungsfläche des Kolbens zwischen dem 1,1- und dem 1,3-fachen der maximalen axialen Ausdehnung der Öffnungsfläche. Wird die Führungsfläche länger gewählt, verringert sich die Standzeit des Kolbens, da dieser zu starr geführt wird und sich dadurch Toleranzen nicht mehr ausgleichen lassen.

Speziell, wenn die axiale Ausdehnung der Führungsfläche des Kolbens das 1,2-fache der maximalen axialen Ausdehnung der Öffnungsfläche beträgt, wird in vorteilhafter Weise erreicht, dass der Kolben optimal geführt wird und sich die Standzeit des Druckkopfes erhöht.

Erfindungsgemäß beträgt die axiale Ausdehnung der Führungsfläche des Kolbens zwischen dem 1- und dem 2,5-fachen eines Kolbendurchmessers des ersten Kolbenabschnitts.

Dieser Bereich ermöglicht in vorteilhafter Weise eine optimale Führung des Kolbens in der Bohrung, wodurch die Standzeit des Druckkopfs erhöht wird.

Bei einem kleineren Wert steigt die Wahrscheinlichkeit eines Versagens des Druckkopfs und bei größeren Werten sind sehr genau gefertigte und aufeinander abgestimmte Bauteile notwendig, die zum einen teuer sind und gegebenenfalls eine geringere Festigkeit aufweisen und dadurch störanfälliger sind.

Speziell, wenn die axiale Ausdehnung der Führungsfläche des Kolbens das 1,25-fache des Kolbendurchmessers des ersten Kolbenabschnitts beträgt, wird in vorteilhafter Weise erreicht, dass der Kolben optimal geführt wird und sich die Standzeit des Druckkopfs erhöht.

In einer Weiterbildung weist der Kolben einen zweiten Kolbenabschnitt auf, dessen Kolbendurchmesser kleiner ist als der Kolbendurchmesser des ersten Kolbenabschnitts, wodurch der Kolben in diesem Abschnitt in vorteilhafter Weise nicht geführt wird.

In einer weiteren Ausführung der Erfindung weist der Kolben einen Einstich auf, der zwischen dem ersten Kolbenabschnitt und einem dritten Kolbenabschnitt angeordnet ist, wobei der dritte Kolbenabschnitt in einer Weiterbildung zwischen dem ersten und dem zweiten Kolbenabschnitt angeordnet ist, wobei der erste Kolbenabschnitt und der dritte Kolbenabschnitt den gleichen Kolbendurchmesser aufweisen.

Durch die Anordnung des Einstichs zwischen dem ersten und dritten Kolbenabschnitt, die jeweils den gleichen Kolbendurchmesser aufweisen, kann in vorteilhafter Weise der Zustand des Druckkopfs, bzw. des Extruders bewertet werden, indem der Einstich während eines Wartungsintervalls auf Verunreinigungen überprüft wird. Ist der Einstich frei von Verunreinigungen, oder eines Belags des Ausgangsmaterials, sind beispielsweise die Temperatur zum Erhitzen des Ausgangsmaterials und die Führung des Kolbens korrekt eingestellt.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigen:
- Fig. 1: einen Druckkopf gemäß der Erfindung;
- Fig. 2: eine Schnittzeichnung des Druckkopfes im druckenden Zustand;
- Fig. 3: eine Schnittzeichnung des Druckkopfes im nicht druckenden Zustand;
- Fig. 4: ein erstes Ausführungsbeispiel für einen Druckkopf und
- Fig. 5: ein zweites Ausführungsbeispiel für einen Druckkopf.

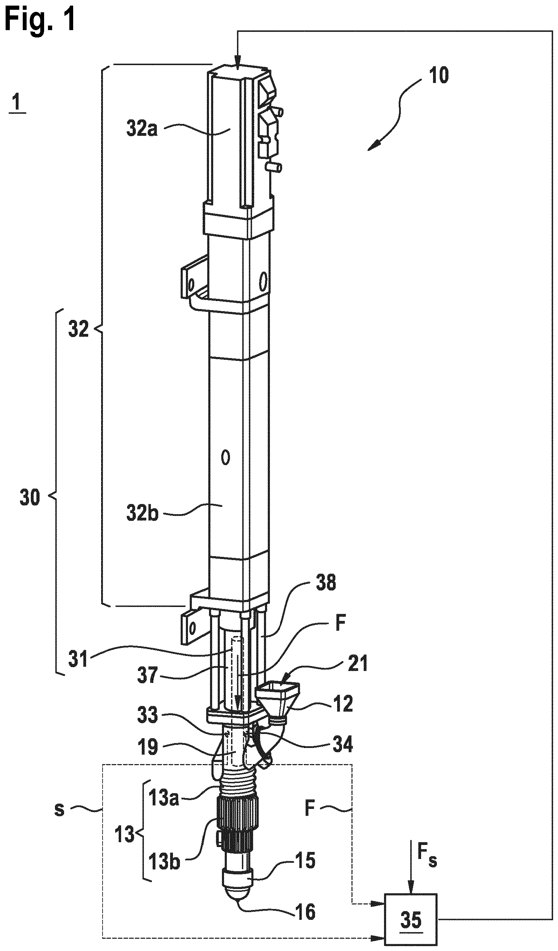

Figur 1 zeigt einen Druckkopf 10 in perspektivischer Außenansicht. Der Druckkopf 10 weist ein Gehäuse 19 auf, welches eine trichterförmige Zuführung 12 für ein Ausgangsmaterial 21 in Form von Granulat 21 aufweist. Das Gehäuse 19 geht nach oben hin in ein Zwischenstück 38 über. Dieses Zwischenstück 38 umfasst einen Zylinder 37, in der ein Kolben 31 geführt ist. Der Kolben 31 ist in der in Figur 1 gewählten Perspektive durch den Zylinder 37 verdeckt und daher nur angedeutet. Die Bewegung des Kolbens 31 wird über einen Elektromotor 32a, dessen Drehbewegung durch eine mechanische Spindel 32b in eine Linearbewegung übersetzt ist, angetrieben. Kolben 31 und Antriebsquelle 32 bilden gemeinsam eine Fördervorrichtung 30 zur Förderung des Granulats 21.

Der Weg s des Kolbens 31 wird mit einem Wegmesssystem 33 gemessen. Die Kraft F, mit der der Kolben 31 auf das Granulat 21 drückt, wird mit einem Kraftsensor 34 gemessen. Die Kraft F und der Weg s werden einer aktiven Regelung 35 zugeführt, die weiterhin einen Sollwert Fs für die Kraft F als Eingabe erhält und den Elektromotor 32a dahingehend ansteuert, dass die tatsächliche Kraft F in Übereinstimmung mit dem Sollwert Fs gehalten wird. Dabei wird durch die Messung des Weges s die Einhaltung der Randbedingung sichergestellt, dass der Kolben 31 nur mit dem vollständig festen Granulat 21 des Ausgangsmaterials 20 in Berührung kommen soll, nicht jedoch mit einer zumindest teilweise plastifizierten Phase, die den Kolben 31 verklebt.

Im oberen Bereich, der der Zuführung 12 zugewandt ist, ist das Gehäuse 19 durch Kühlmittel 13 gebildet, die eine aktive Kühlung 13a mit einem Kühlmedium und eine passive Kühlung 13b mit Kühlrippen umfassen. Im unteren Bereich, der der Austrittsöffnung 16 zugewandt ist, ist das Gehäuse 16 hingegen an seinem Außenumfang von einem Heizband 15 umgeben, das die Heizenergie für die Plastifizierung des Ausgangsmaterials 21 bereitstellt.

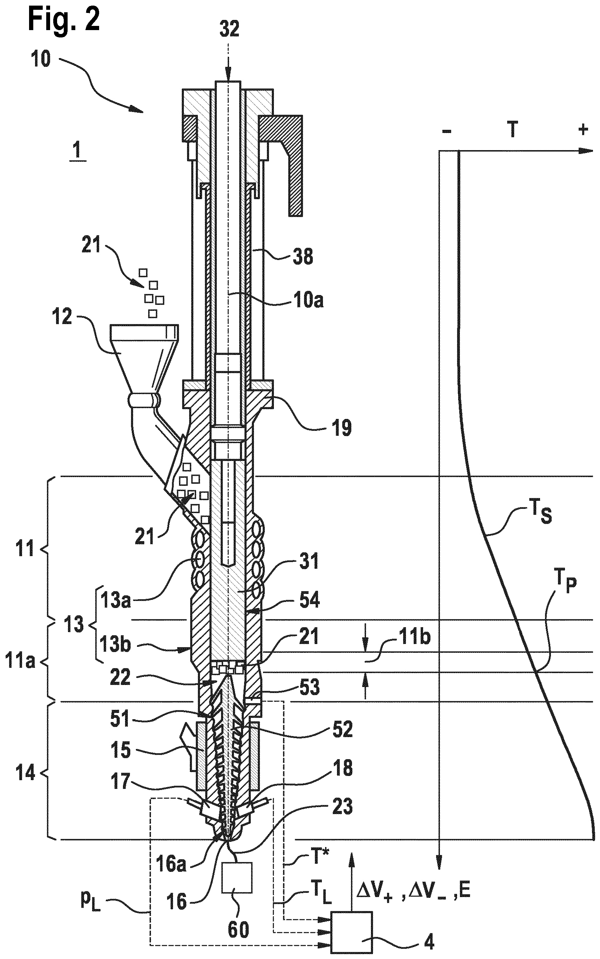

Figur 2 zeigt das Innere des Druckkopfes 10 in dem Teil des Arbeitszyklus, in dem gedruckt wird. Im Gehäuse 19 des Druckkopfes 10 befindet sich eine Einzugszone 11, in die über die trichterförmige Zuführung 12 das Granulat 21, bzw. das Ausgangsmaterial 21 zuführbar ist. Der Kolben 31 fördert das Granulat 21 aus der Einzugszone 11 in die Plastifizierungszone 14, auch Meteringzone genannt, weil dort das portionsweise Abmessen des Ausgangsmaterials 21 stattfindet. Die Einzugszone 11 grenzt über eine Kompressionszone 11a an die Plastifizierungszone 14. Innerhalb der Kompressionszone 11a befindet sich die Grenzschicht 11b zwischen stark komprimiertem, aber immer noch festem und nicht klebrigem Granulat 21 einerseits und Material 22, dessen Verflüssigung begonnen hat, andererseits. In der in Figur 2 gezeigten Stellung befindet sich das vordere Ende des Kolbens 31 genau in dieser Grenzschicht 11b.

Der Innenraum des Gehäuses 19 ist im oberen Bereich des Gehäuses 19 bis einschließlich zur Grenzschicht 11b als gerader Kreiszylinder ausgebildet, in dem der Kolben 31 führbar ist. Weiter unten geht der Innenraum in eine Aufschmelzgeometrie 51 über. Diese Aufschmelzgeometrie 51 zeichnet sich zum einen dadurch aus, dass sich ihr Innenquerschnitt nach unten hin immer weiter verjüngt, so dass sich der Druck des flüssigen Materials 22, bzw. der flüssigen Phase 22 immer weiter erhöht. Zum anderen weist die Innenwand der Aufschmelzgeometrie 51 eine Strukturierung auf, die eine Durchmischung der flüssigen Phase 22 des Ausgangsmaterials 21 bewirkt. Diese Strukturierung kann beispielsweise rippenförmig sein, wie es in Figur 2 beispielhaft eingezeichnet ist. In der Plastifizierungszone 14 ist am Außenumfang des Gehäuses 19 das Heizband 15 angeordnet, dessen Heizleistung durch eine im Innenraum des Gehäuses 19, also innerhalb der flüssigen Phase 22, angeordnete Wärmeleitstruktur 52 (Wärmeleittorpedo) homogen über die flüssige Phase 22 verteilt wird. An Stelle des in den Figuren 1 und 2 beispielhaft eingezeichneten Heizbandes 15 ist auch jede andere Art der Heizung möglich. Im der Austrittsöffnung 16 am nächsten gelegenen vorderen Bereich 16a der Plastifizierungszone 14 wird der Druck p_{L} der flüssigen Phase 22 mit einem Drucksensor 17 gemessen, und die Temperatur T_{L} der flüssigen Phase 22 wird mit einem Temperatursensor 18 gemessen. Der Bereich 16a ist nur wenige Kubikmillimeter groß, so dass kein überschüssiges Granulat 21 aufgeschmolzen wird. Die Wärmeleitstruktur 52 sorgt dafür, dass die flüssige Phase 22 des Ausgangsmaterials 21 in dem Bereich 26a stets die höchstmögliche Viskosität aufweist, ohne sich zu überhitzen.

Die Messwerte für p_{L} und T_{L} werden an eine Auswerteeinheit 4 weitergeleitet, die zusätzlich den Temperaturmesswert T* eines unmittelbar an der oberen Grenze der Plastifizierungszone 14 angeordneten weiteren Temperatursensors 53 als Eingabe erhält.

Aus der flüssigen Phase 22 des Ausgangsmaterials 21 wird durch den vom Kolben 31 erzeugten Druck p_{L} ein Strang 23 durch die Austrittsöffnung 16 des Druckkopfes 10 getrieben und lagert sich auf einem zu fertigenden Objekt 60 ab. Die Auswerteeinheit 4 berechnet, um welchen Betrag ΔV₊ das Volumen des Strangs 23 einerseits durch die Entspannung vom hohen Druck p_{L} zunimmt und um welchen Betrag ΔV₋ dieses Volumen andererseits durch die Abkühlung von der hohen Temperatur T_{L} abnimmt. Zugleich wird auch der Energieeintrag E in das Objekt 60 durch das angelagerte Material 23 berechnet.

Der Kolben 31 ist im Gehäuse 19 mit einem geringfügigen Entlüftungsspalt 54 geführt. Durch diesen Spalt 54 kann die in der Schüttung des Granulats 21 enthaltene Umgebungsluft, die bei der Kompression dieser Schüttung frei wird, abgeführt werden. Auf dem gleichen Weg können auch Gase, die bei der Plastifizierung bzw. teilweisen Zersetzung des Ausgangsmaterials 21 entstehen, abgeführt werden.

Wie bereits in Figur 1 angedeutet, ist das Gehäuse 19 zwischen der Grenzschicht 11b und der Zuführung 12 durch Kühlmittel 13 gekühlt, die aus der aktiven Kühlung 13a mit einem strömenden Kühlmedium sowie aus der passiven Kühlung 13b mittels Kühlrippen gebildet werden. Dadurch wird die Temperatur Ts innerhalb der Einzugszone 11, die von oben nach unten stetig ansteigt, ständig unterhalb der Temperatur T_{P} gehalten, ab der das Ausgangsmaterial 21 plastifiziert. T_{P} wird gerade am unteren Ende der Grenzschicht 11b erreicht. Indem die Einzugszone 11 permanent auf eine geeignete Temperatur temperiert wird, werden ein zu frühes Aufschmelzen des Granulats 21, ein Verstopfen der Einzugszone 11 und ein Wassereintrag durch Kondensation vermieden. Auch regelt diese Temperierung die genaue Lage der Grenzschicht 11b und kann sie insbesondere in einer konstanten Position halten.

Der Temperaturverlauf entlang der Längsachse 10a des Druckkopfes 10 von kalt (―) zu warm (+) ist rechts neben dem Druckkopf 10 qualitativ eingezeichnet.

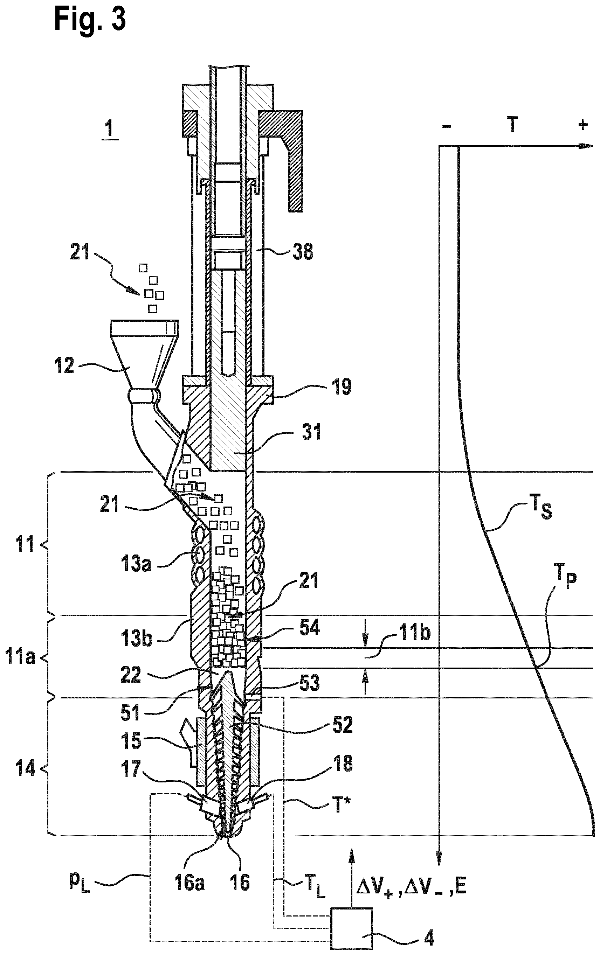

Figur 3 zeigt den gleichen Druckkopf 10 in der gleichen Ansicht wie in Figur 2 mit dem Unterschied, dass hier der Kolben 31 nach oben hinter die Einzugszone 11 zurückgezogen wurde. Dies hat zum einen den Effekt, dass in dem in Figur 3 gezeigten Zustand kein Strang 23 von Ausgangsmaterial 21 aus der Austrittsöffnung 16 austritt. Zum anderen ist die Einzugszone 11 frei für das Nachrieseln von frischem Granulat 21. Wenn der Kolben 31 wieder gesenkt wird, wird das frische Granulat 21, wie in Figur 2 gezeigt, komprimiert und in der Plastifizierungszone 14 plastifiziert, bevor es als Strang 23 aus der Austrittsöffnung 16 austritt.

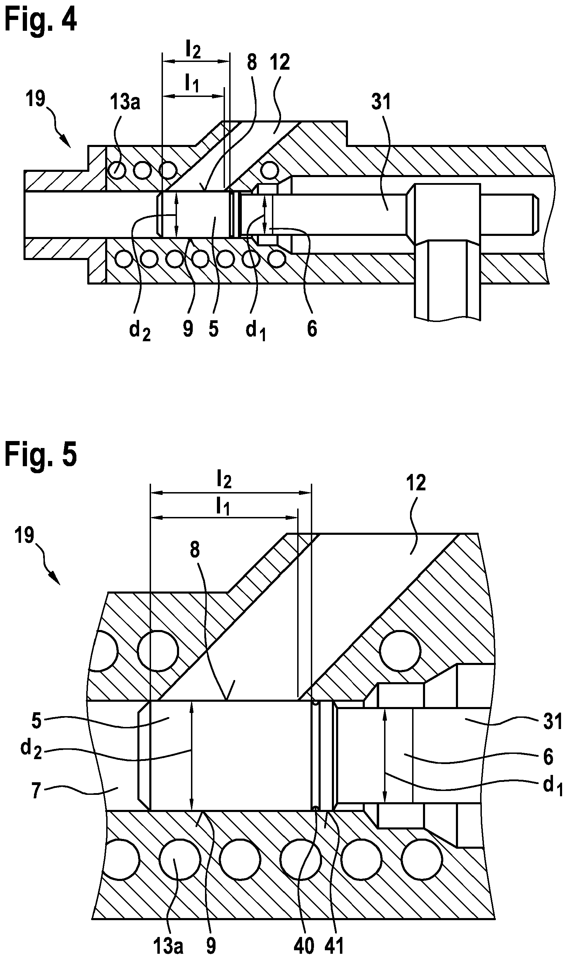

Figur 4 zeigt ein erstes Ausführungsbeispiel des erfindungsgemäßen Druckkopfes 10 in einer Schnittzeichnung. Der Kolben 31 weist einen, der Plastifizierungszone 14 zugewandten, ersten Kolbenabschnitt 5 mit einer Führungsfläche 9 auf, durch die der Kolben 31 in einer Bohrung 7 des Druckkopfs 10, bzw. des Gehäuses 19 geführt ist.

Die Führungsfläche 9 ist in ihrer axialen Ausdehnung l₂ länger als eine maximale axiale Ausdehnung l₁ einer Öffnungsfläche 8 der Zuführung 12 zur Bohrung 7. Die Öffnungsfläche 8 der Zuführung 12 zur Bohrung 7 ist derart ausgelegt, dass das zugeführte Granulat 21 optimal in die Bohrung, bzw. in die Einzugszone 11 zugeführt werden kann.

Die axiale Ausdehnung l₂ der Führungsfläche 9 des Kolbens 31 beträgt in dieser Ausführungsform das 1,2-fache der maximalen axialen Ausdehnung l₁ der Öffnungsfläche 8.

Ferner weist der erste Kolbenabschnitt 5 einen Kolbendurchmesser d₂ auf, wobei die axiale Ausdehnung l₂ der Führungsfläche 9 des Kolbens 31 bevorzugt das 1,25-fache des Kolbendurchmessers d₂ des ersten Kolbenabschnitts 5 beträgt.

Der dargestellte Kolben 31 mit der entsprechend dimensionierten Führungsfläche 9 vermeidet ein Verkanten des Kolbens 31 in der Bohrung 7 und verringert ein Eindringen des verformten Granulats in den Spalt zwischen der Führungsfläche 9 und der Bohrung 7.

Der Kolben 31 weist ferner einen zweiten Kolbenabschnitt 6 auf, dessen Kolbendurchmesser d₁ kleiner ist als der Kolbendurchmesser d₂ des ersten Kolbenabschnitts 5.

Figur 5 zeigt ein zweites Ausführungsbeispiel des Druckkopfes 10, wobei der Kolben 31 einen Einstich 40 aufweist, der zwischen dem ersten Kolbenabschnitt und einem dritten Kolbenabschnitt 41 angeordnet ist.

Der dritte Kolbenabschnitt 41 ist zwischen dem ersten 5 und dem zweiten 6 Kolbenabschnitt angeordnet und er weist den gleichen Kolbendurchmesser d₂ wie der erste Kolbenabschnitt (5) auf.

Der Einstich 40 dient dazu die Qualität der Druckkopfeinstellungen zu bewerten, indem der Einstich 40 während der Wartungsintervalle auf Ablagerungen geprüft wird.

Die axiale Ausdehnung l₂ der Führungsfläche 9 des Kolbens 31 beträgt in dieser Ausführungsform das 1,2-fache der maximalen axialen Ausdehnung l₁ der Öffnungsfläche 8 und reicht bis zum Einstich 40.

Der Druckkopf 10 kann in beliebige 3D-Drucker integriert werden.

## Patentansprüche

1. Druckkopf (10) für einen 3D-Drucker (1), umfassend eine Einzugszone (11) mit einer Zuführung (12) für ein in seiner Viskosität veränderliches Ausgangsmaterial (21), eine Plastifizierungszone (14) mit einer Heizung (15) und einer Austrittsöffnung (16) für die flüssige Phase (22) des Ausgangsmaterials (21) sowie eine Fördervorrichtung (30) zur Förderung des Ausgangsmaterials (21) von der Einzugszone (11) in die Plastifizierungszone (14), wobei die Fördervorrichtung (30) einen in die Einzugszone (11) einführbaren Kolben (31) umfasst, wobei
der Kolben (31) einen der Plastifizierungszone (14) zugewandten ersten Kolbenabschnitt (5) mit einer Führungsfläche (9) aufweist, durch die der Kolben (31) in einer Bohrung (7) des Druckkopfs (10) geführt ist, **dadurch gekennzeichnet, dass**
die Führungsfläche (9) in ihrer axialen Ausdehnung (l₂) länger ist, als eine maximale axiale Ausdehnung (l₁) einer Öffnungsfläche (8) der Zuführung (12) zur Bohrung (7), und,
die axiale Ausdehnung (l₂) der Führungsfläche (9) des Kolbens (31) zwischen dem 1- und dem 2,5-fachen eines Kolbendurchmessers (d₂) des ersten Kolbenabschnitts (5) beträgt.

2. Druckkopf (10) nach Anspruch 1
**dadurch gekennzeichnet, dass**
die axiale Ausdehnung (l₂) der Führungsfläche (9) des Kolbens (31) zwischen dem 1,1- und dem 1,3-fachen der maximalen axialen Ausdehnung (l₁) der Öffnungsfläche (8) beträgt.

3. Druckkopf (10) nach einem der vorhergehenden Ansprüche, **dadurch gekennzeichnet, dass**
die axiale Ausdehnung (l₂) der Führungsfläche (9) des Kolbens (31) das 1,2-fache der maximalen axialen Ausdehnung (l₁) der Öffnungsfläche (8) beträgt.

4. Druckkopf (10) nach einem der vorhergehenden Ansprüche, **dadurch gekennzeichnet, dass**
die axiale Ausdehnung (l₂) der Führungsfläche (9) des Kolbens (31) das 1,25-fache des Kolbendurchmessers (d₂) des ersten Kolbenabschnitts (5) beträgt.

5. Druckkopf (10) nach einem der vorhergehenden Ansprüche, **dadurch gekennzeichnet, dass**
der Kolben (31) einen zweiten Kolbenabschnitt (6) aufweist, dessen Kolbendurchmesser (d₁) kleiner ist als der Kolbendurchmesser (d₂) des ersten Kolbenabschnitts (5).

6. Druckkopf (10) nach einem der vorhergehenden Ansprüche, **dadurch gekennzeichnet, dass**
der Kolben (31) einen Einstich (40) aufweist, der zwischen dem ersten Kolbenabschnitt (5) und einem dritten Kolbenabschnitt (41) angeordnet ist.

7. Druckkopf (10) nach Anspruch 6,
**dadurch gekennzeichnet, dass**
der dritte Kolbenabschnitt (41) zwischen dem ersten (5) und dem zweiten (6) Kolbenabschnitt angeordnet ist.

8. Druckkopf (10) nach Anspruch 7,
**dadurch gekennzeichnet, dass**
der erste Kolbenabschnitt (5) und der dritte Kolbenabschnitt (41) den gleichen Kolbendurchmesser (d₂) aufweisen.

## Claims

1. Print head (10) for a 3D printer (1), comprising an intake zone (11) with a feeder (12) for a raw material (21) of variable viscosity, a plasticization zone (14) with a heater (15) and a discharge opening (16) for the liquid phase (22) of the raw material (21), and a conveyor device (30) for conveying the raw material (21) from the intake zone (11) into the plasticization zone (14), wherein the conveyor device (30) comprises a piston (31) which can be inserted into the intake zone (11), wherein the piston (31) has a first piston section (5) which faces the plasticization zone (14) and has a guide surface (9) by means of which the piston (31) is guided in a bore (7) of the print head (10), **characterized in that**
the axial extent (l₂) of the guide surface (9) is longer than a maximum axial extent (l₁) of an opening area (8) of the feeder (12) leading to the bore (7), and
the axial extent (l₂) of the guide surface (9) of the piston (31) is between 1 and 2.5 times of a piston diameter (d₂) of the first piston section (5) .

2. Print head (10) according to Claim 1, **characterized in that**
the axial extent (l₂) of the guide surface (9) of the piston (31) is between 1.1 and 1.3 times the maximum axial extent (l₁) of the opening area (8).

3. Print head (10) according to one of the preceding claims,
**characterized in that**
the axial extent (l₂) of the guide surface (9) of the piston (31) is 1.2 times the maximum axial extent (11) of the opening area (8).

4. Print head (10) according to one of the preceding claims,
**characterized in that**
the axial extent (l₂) of the guide surface (9) of the piston (31) is 1.25 times the piston diameter (d₂) of the first piston section (5).

5. Print head (10) according to one of the preceding claims,
**characterized in that**
the piston (31) has a second piston section (6), the piston diameter (d₁) of which is smaller than the piston diameter (d₂) of the first piston section (5) .

6. Print head (10) according to one of the preceding claims,
**characterized in that**
the piston (31) has a groove (40) which is arranged between the first piston section (5) and a third piston section (41).

7. Print head (10) according to Claim 6, **characterized in that**
the third piston section (41) is arranged between the first (5) and the second (6) piston section.

8. Print head (10) according to Claim 7, **characterized in that**
the first piston section (5) and the third piston section (41) have the same piston diameter (d₂).

## Revendications

1. Tête d'impression (10) pour une imprimante 3D (1), comprenant une zone de chargement (11) dotée d'une alimentation (12) pour un matériau de départ (21) de viscosité variable, une zone de plastification (14) dotée d'un dispositif de chauffage (15) et d'une ouverture de sortie (16) pour la phase liquide (22) du matériau de départ (21), ainsi qu'un dispositif de transport (30) pour le transport du matériau de départ (21) depuis la zone de chargement (11) dans la zone de plastification (14), le dispositif de transport (30) comprenant un piston (31) qui peut être introduit dans la zone de chargement (11),
le piston (31) comprenant une première section de piston (5) tournée vers la zone de plastification (14), dotée d'une surface de guidage (9) qui permet de guider le piston (31) dans un alésage (7) de la tête d'impression (10), **caractérisée en ce que** la surface de guidage (9) est plus longue dans son extension axiale (l₂) qu'une extension axiale maximale (l₁) d'une surface d'ouverture (8) de l'alimentation (12) vers l'alésage (7), et
l'extension axiale (l₂) de la surface de guidage (9) du piston (31) est d'entre 1 et 2,5 fois un diamètre de piston (d₂) de la première section de piston (5).

2. Tête d'impression (10) selon la revendication 1, **caractérisée en ce que**
l'extension axiale (l₂) de la surface de guidage (9) du piston (31) est d'entre 1,1 et 1,3 fois l'extension axiale maximale (l₁) de la surface d'ouverture (8).

3. Tête d'impression (10) selon l'une quelconque des revendications précédentes, **caractérisée en ce que** l'extension axiale (l₂) de la surface de guidage (9) du piston (31) est de 1,2 fois l'extension axiale maximale (l₁) de la surface d'ouverture (8).

4. Tête d'impression (10) selon l'une quelconque des revendications précédentes, **caractérisée en ce que** l'extension axiale (l₂) de la surface de guidage (9) du piston (31) est de 1,25 fois le diamètre de piston (d₂) de la première section de piston (5).

5. Tête d'impression (10) selon l'une quelconque des revendications précédentes, **caractérisée en ce que** le piston (31) comprend une deuxième section de piston (6), dont le diamètre de piston (d₁) est inférieur au diamètre de piston (d₂) de la première section de piston (5) .

6. Tête d'impression (10) selon l'une quelconque des revendications précédentes, **caractérisée en ce que** le piston (31) comprend une entaille (40), qui est agencée entre la première section de piston (5) et une troisième section de piston (41).

7. Tête d'impression (10) selon la revendication 6, **caractérisée en ce que**
la troisième section de piston (41) est agencée entre la première (5) et la deuxième (6) section de piston.

8. Tête d'impression (10) selon la revendication 7, **caractérisée en ce que**
la première section de piston (5) et la troisième section de piston (41) présentent le même diamètre de piston (d₂).
